# EUROPÄISCHE PATENTANMELDUNG

(11) **EP 2 156 917 A1**
(43) Veröffentlichungstag der Anmeldung: **24.02.2010**
(21) Anmeldenummer: 09006859.4
(22) Anmeldetag: 20.05.2009
(51) Int. Cl.: B23K 26/02, B23K 26/32

(54) **Verfahren zum Laserschweissen von beschichteten Werkstücken**

(30) Priorität: 19.08.2008 DE 102008038372
(71) Anmelder: DURA Automotive Body & Glass Systems GmbH, 58840 Plettenberg (DE)
(72) Erfinder: Jacobi, Ralf, Dipl.-Ing, 58089 Hagen (DE)
(74) Vertreter: Zinnecker, Armin

(57) **Zusammenfassung**

Ein verbessertes Verfahren zum Laserschweißen von beschichteten Werkstücken, insbesondere von verzinkten Stahlblechen (3, 4) ist **dadurch gekennzeichnet, daß** die Werkstücke (5, 7.2; 6, 8.2) beim Verschweißen in einem Winkel von 2° bis 8°, vorzugsweise von 2,5° bis 7°, vorzugsweise von 3° bis 5°, zueinander angeordnet sind (Fig. 3).

## Beschreibung

Die Erfindung betrifft ein Verfahren zum Laserschweißen von beschichteten Werkstücken, insbesondere von verzinkten Stahlblechen. Die Erfindung betrifft ferner ein Bauteil, insbesondere für ein Kraftfahrzeug.

Aus der DE 10 2004 008 108 B4 ist es bekannt, zwei verzinkte Stahlbleche durch Laserschweißen zu verbinden. Beim Laserschweißen von verzinkten Stahlblechen muß der beim Schweißen entstehende Zinkdampf aus dem Schweißbereich entfernt werden. Die zu verschweißenden, beschichteten Werkstücke müssen also in einer Weise gestaltet werden, daß der beim Schweißen entstehende Zinkdampf aus dem Schweißbereich entweichen kann, da die Schweißverbindungen ansonsten Poren und Fehlstellen (Löcher) aufweisen. Zu diesem Zweck wird in der DE 10 2004 008 108 B4 vorgeschlagen, daß wenigstens ein Werkstück eine Oberflächenstruktur aufweist, die einen bestimmten Abstand zwischen den Werkstückflächen schafft. Die abstandschaffende Oberflächenstruktur kann als Sicke ausgebildet sein. Der an die Sicke angrenzende Bereich wirkt als Kanal zum Entweichen des Beschichtungsdampfes.

Aufgabe der Erfindung ist es, ein verbessertes Verfahren zum Laserschweißen von beschichteten Werkstücken, insbesondere von verzinkten Stahlblechen, vorzuschlagen.

Erfindungsgemäß wird diese Aufgabe dadurch gelöst, daß die Werkstücke beim Verschweißen in einem Winkel von 2° bis 8° zueinander angeordnet sind.

Die Erfindung beruht auf der Erkenntnis, daß der optimale Entgasungsspalt, also der optimale Spalt zum Abtransport der Zinkdämpfe oder sonstigen Dämpfe der Beschichtung, zwischen 0,1 mm und 0,2 mm beträgt. Dabei ist es zunächst unerheblich, mit welcher Methode diese Spalt erzeugt wird, er muß nur sichergestellt werden. Geringfügige Abweichungen nach unten oder nach oben sind möglich. Die Herstellung von Sicken oder sonstigen Oberflächenstrukturen, die einen Abstand zwischen den zu verschweißenden Werkstücken erzeugen, ist verhältnismäßig aufwendig. Um den optimalen Entgasungsspalt zwischen den Werkstücken herzustellen, wird erfindungsgemäß vorgeschlagen, die Werkstücke in einem Winkel von 2° bis 8° zueinander anzuordnen. Die Verschweißung erfolgt dann an einer Stelle, an der der Abstand zwischen den Werkstücken zwischen 0,1 mm und 0,2 mm beträgt. Geringfügige Abweichungen nach unten oder nach oben sind möglich. Dadurch, daß der Winkel zwischen den Werkstücken verhältnismäßig klein ist, ist der Bereich, in dem die Verschweißung erfolgen kann, verhältnismäßig groß. Das erfindungsgemäße Verfahren ist damit verhältnismäßig unempfindlich gegenüber Toleranzen in den Werkstücken und in der Anordnung der Werkstücke zueinander. Dies bedeutet einen guten Toleranzausgleich für die zu verbindenden Werkstücke.

Vorteilhaft ist es, wenn die Werkstücke beim Verschweißen in einem Winkel von 2,5° bis 7° oder in einem Winkel von 2,5° bis 6° zueinander angeordnet sind. Besonders vorteilhaft ist ein Winkelbereich von 3° bis 5°. Ein Winkel von 3° ist besonders geeignet. Der Winkelbereich von 3° bis 5° ergibt sich daraus, daß ein Winkel von 3° mit einer Plustoleranz von 2° vorgesehen wird.

Die Erfindung betrifft ferner ein Bauteil, insbesondere für ein Kraftfahrzeug, das aus zwei in einem Winkel von 2° bis 8° zueinander angeordneten, beschichteten Werkstücken, insbesondere verzinkten Stahlblechen, besteht, die miteinander laserverschweißt sind. Die Verschweißung erfolgt an einer Stelle, an der der Abstand der Werkstücke voneinander 0,1 mm bis 0,2 mm beträgt. Geringfügige Abweichungen nach unten oder nach oben sind möglich. Der Winkel zwischen den Werkstücken beträgt vorzugsweise 2,5° bis 7°, ferner vorzugsweise 2,5° bis 6°, ferner vorzugsweise 3° bis 5°, ferner vorzugsweise 3°.

Die Erfindung betrifft ferner ein Verfahren zum Ermitteln der Position des Laserstrahls beim Laserschweißen von beschichteten Werkstücken, insbesondere von verzinkten Stahlblechen, bei dem die Werkstücke in einem Winkel von 2° bis 8°, vorzugsweise in einem Winkel 2,5° bis 7°, vorzugsweise in einem Winkel von 2,5° bis 6°, vorzugsweise in einem Winkel von 3° bis 5°, vorzugsweise in einem Winkel von 3° zueinander angeordnet sind. Die Position des Laserstrahls soll in der Weise eingestellt werden, daß der Abstand der Werkstücke an der Schweißstelle im Bereich zwischen 0,1 mm und 0,2 mm liegt. Geringfügige Abweichungen nach unten oder nach oben sind möglich. Hierzu wird die Position des Laserstrahls zunächst so eingestellt, daß der Abstand zwischen den Werkstücken einen vorgegebenen Wert beträgt. Vorzugsweise beträgt der Wert 1,5 mm, liegt also vorzugsweise in der Mitte zwischen 1,0 mm und 2,0 mm. Nach dem Verschweißen der Werkstücke wird eine Schliffprobe der verschweißten Werkstücke hergestellt und ausgewertet. Die Position der Schweißnaht und/oder des Laserstrahls wird anschließend in Abhängigkeit der Schliffprobe nachjustiert.

Ausführungsbeispiele der Erfindung werden nachstehend anhand der beigefügten Zeichnung im einzelnen erläutert. In der Zeichnung zeigt
- Fig. 1: zwei zu verschweißende beschichtete Werkstücke, die in einem Winkel von 3° zueinander angeordnet sind, in einer Seitenansicht,
- Fig. 2: zwei der Fig. 1 entsprechende zu verschweißende beschichtete Werkstücke, die in einem Winkel von 5° zueinander angeordnet sind, in einer Seitenansicht,
- Fig. 3: ein Bauteil eines Kraftfahrzeugs in einer Seitenansicht und
- Fig. 4: einen Teil des in Fig. 3 dargestellten Bauteils in einer vergrößerten Seitenansicht.

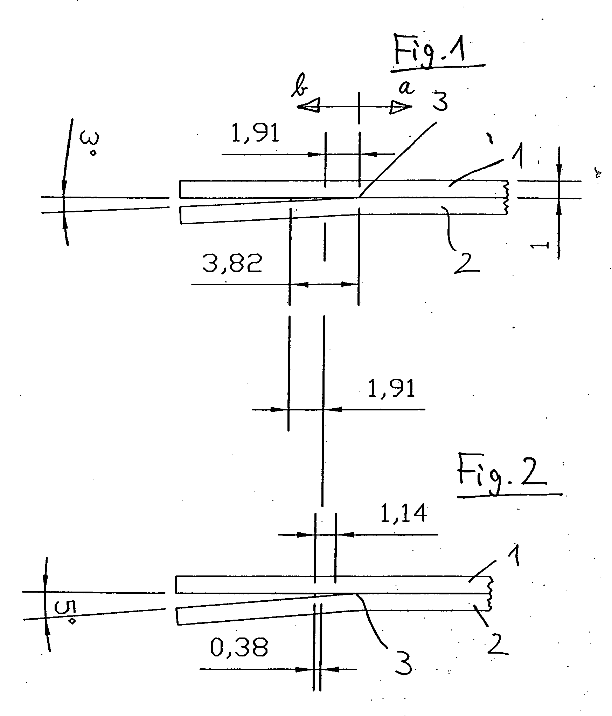

Fig. 1 zeigt zwei beschichtete Werkstücke, nämlich zwei verzinkte Stahlbleche 1, 2, die in einem Teilbereich a aneinander anliegen und in einem anderen Teilbereich b in einem Winkel von 3° zueinander verlaufen. Die Stelle, an der der Winkel zwischen den verzinkten Stahlblechen 1, 2 beginnt, ist der Wurzelpunkt 3. Der Winkel zwischen den verzinkten Stahlblechen 1, 2 kann durch Rollformen, Pressen oder Abkanten oder durch ein anderes Verfahren hergestellt werden.

Aus dem Winkel von 3° ergibt sich, daß der Spalt zwischen den verzinkten Stahlblechen 1, 2 in einer Entfernung von 1,91 mm vom Wurzelpunkt 3 der Abkantung 0,1 mm beträgt. In einem Abstand von 3,82 mm vom Wurzelpunkt 3 beträgt der Spalt 0,2 mm. Daraus ergibt sich bei einem Winkel von 3° und unter Berücksichtigung des optimalen Entgasungsspaltes von 0,1 mm bis 0,2 mm ein möglicher Schweißbereich von (3,82 mm - 1,91 mm =) 1,91 mm.

In Fig. 2 ist ein entsprechendes Bauteil mit einem Öffnungswinkel von 5° gezeigt. Hier beläuft sich die Höhe des Spaltes in einem Abstand von 1,14 mm vom Wurzelpunkt 3 auf 0,1 mm und in einem Abstand von 2,28 mm vom Wurzelpunkt 3 auf 0,2 mm. Daraus ergibt sich bei einem Winkel von 5° und unter Berücksichtigung des optimalen Entgasungsspaltes von 0,1 bis 0,2 mm ein möglicher Schweißbereich von (2,28 - 1,14 =) 1,14 mm.

Wenn dem Entgasungswinkel von 3° eine Plustoleranz von + 2° zugestanden wird, was einen Winkelbereich von 3° bis 5° bedeutet, ergibt sich daraus durch die geometrische Überlagerung ein zulässiger Abstandsbereich vom Wurzelpunkt 3 in Höhe von 1,91 bis 2,28 mm, also ein möglicher Schweißbereich, in dem der Laser positioniert werden kann, von (2,28 mm - 1,91 mm =) 0,37 mm bzw. bei noch genauerer Rechnung von 0,38 mm.

Praktische Versuche haben allerdings ergeben, daß davon ausgegangen werden kann, daß der real mögliche Schweißbereich bei 0,8 mm bis 1,0 mm liegt. Ein möglicher Grund hierfür besteht darin, daß bei kleinen Winkeln die Steigung so gering ist, daß der Spalt nur minimal größer wird und kein nachteiliger Einfluß auf den Schweißprozeß vorliegt. Daher ist davon auszugehen, daß auch größere Abweichungen als + 2° vom Sollwinkel 3° zugelassen werden können. Der praktische Schweißbereich wird dadurch nur etwas kleiner, läßt jedoch immer noch einen ausreichenden Toleranzausgleich zu.

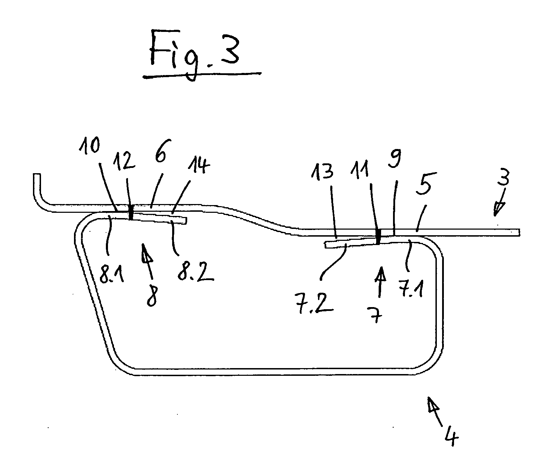

Fig. 3 zeigt ein Beispiel eines Bauteils eines Kraftfahrzeugs, das aus zwei verzinkten Stahlblechen 3, 4 besteht. Das verzinkte Stahlblech 3 hat ein L-förmiges Profil, dessen längerer Schenkel abgekröpft ist, so daß zwei parallele, beabstandete Bereiche 5, 6 entstehen. Das zweite verzinkte Stahlprofil 4 ist U-förmig ausgestaltet, wobei die beiden Schenkel jeweils einen nach innen weisenden Bereich 7, 8 aufweisen. Die Bereiche 5, 7 und 6, 8 sind durch jeweils einen Überlappstoß miteinander verbunden.

Der Bereich 7 umfaßt einen Teilbereich 7.1, der an dem Bereich 5 anliegt, und einen Teilbereich 7.2, der in einem Winkel von 3° mit einer Toleranz von + 2° zu dem Bereich 5 angeordnet ist. In entsprechender Weise umfaßt der Bereich 8 einen Teilbereich 8.1, der an dem Bereich 6 anliegt, und einen Teilbereich 8.2, der mit dem Bereich 6 einen Winkel von 3° mit einer Toleranz von + 2° bildet. Der Wurzelpunkt, an dem die Bereiche 7.1 und 7.2 aneinandergrenzen, ist mit 9 bezeichnet, der Wurzelpunkt an der Berührungsstelle der Bereiche 8.1 und 8.2 ist mit 10 bezeichnet.

Die verzinkten Stahlbleche 3 und 4 sind an zwei Stellen durch Schweißnähte 11, 12 miteinander verbunden, die durch Laserschweißen hergestellt sind. Der Abstand der Schweißnaht 11 vom Wurzelpunkt 9 ist derart bemessen, daß der Spalt 13 zwischen dem Abschnitt 5 und dem Abschnitt 7.2 an dieser Stelle etwa 1,5 mm beträgt. In entsprechender Weise ist der Abstand der Verschweißung 12 von dem Wurzelpunkt 10 derart bemessen, daß der Spalt 14 zwischen den Abschnitten 6 und 8.2 an dieser Stelle etwa 1,5 mm beträgt.

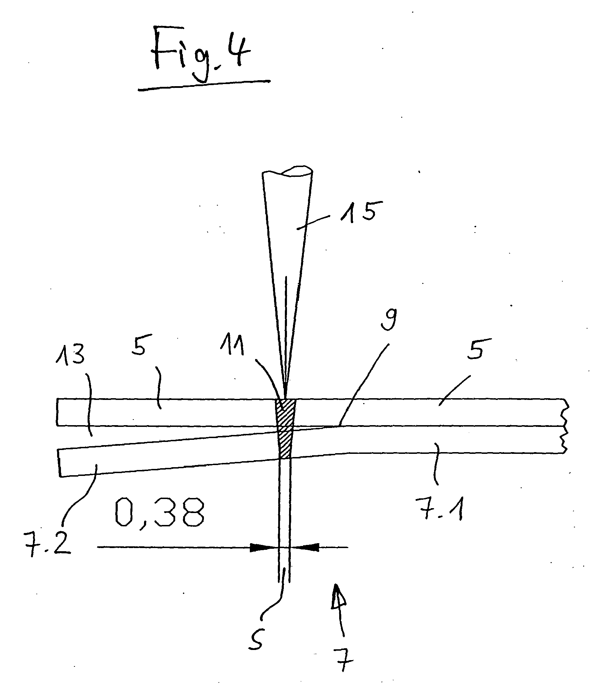

Fig. 4 zeigt den Bereich der Schweißnaht 11 aus Fig. 3 in einer vergrößerten Darstellung. Die Schweißnaht 11 wird durch den Laserstrahl 15 erzeugt, der auf die Mitte des Schweißbereiches 11 positioniert ist. Die Entgasung der Zinkdämpfe erfolgt über den nach außen offenen Winkel zwischen den Bereichen 5 und 7.2, also durch den Spalt 13. In Fig. 4 ist der theoretische mögliche Schweißbereich s eingezeichnet, der sich im Bereich der Verschweißung 11 befindet und der bei einem Entgasungswinkel von 3° und einer zulässigen Toleranz von + 2° 0,38 mm beträgt.

Vor dem Verschweißen werden die Werkstücke 3, 4 über eine Spannvorrichtung (in der Zeichnung nicht dargestellt) lagerichtig vorgespannt.

Die optimale Position für den Laserstrahl 15 kann dadurch ermittelt werden, daß diese Position zunächst auf den nach den CAD-Daten optimalen Punkt in der Mitte des Schweißbereiches eingestellt wird. Nach der Verschweißung werden anhand von Schliffproben die Schweißnähte ausgewertet. Anschließend werden die Schweißnähte und/oder die Position des Laserstrahls verschoben, um die optimale Position in der Praxis zu finden und den Grenzbereich auszuloten. Damit sind die Positionstoleranzen für die Führungsmaschine und die Werkstücke ermittelt.

In der in Fig. 3 gezeigten Ausführungsform liegen die abgewinkelten Bereiche 7.2 und 8.2 unterhalb der Bereiche 5 und 6. Es ist allerdings grundsätzlich auch möglich, die abgewinkelten Bereiche nach oben zu legen, wenn die Strahlrichtung von oben (vgl. Fig. 4) beibehalten wird. Aus schweißtechnischer Sicht ist dies ohne weiteres möglich.

Durch die Erfindung wird der Vorteil erreicht, daß größere Werkstücktoleranzen vorgesehen werden können. Ferner kann der Vorteil erreicht werden, daß die Herstellung von Entgasungssicken entfallen kann. Durch den vorgesehenen Entgasungswinkel ist es möglich, zum einen eine ausreichende Entgasung für die beim Laserschweißen entstehenden Zinkdämpfe zu ermöglichen und zum anderen die Positionstoleranz zu vergrößern. Dabei kann sichergestellt werden, daß der Entgasungsspalt im optimalen Bereiche von 0,1 mm bis 0,2 mm liegt, wobei Abweichungen nach unten oder oben möglich sind. Bei größeren Entgasungswinkeln ist die Positionstoleranz wesentlich kleiner.

## Patentansprüche

1. Verfahren zum Laserschweißen von beschichteten Werkstücken, insbesondere von verzinkten Stahlblechen (1, 2; 3, 4),
**dadurch gekennzeichnet,**
**daß** die Werkstücke (1, 2; 5, 7.2; 6, 8.2) beim Verschweißen in einem Winkel von 2° bis 8° zueinander angeordnet sind.

2. Verfahren nach Anspruch 1, **dadurch gekennzeichnet, daß** die Werkstücke beim Verschweißen in einem Winkel von 2,5° bis 7° zueinander angeordnet sind.

3. Verfahren nach Anspruch 1 oder 2, **dadurch gekennzeichnet, daß** die Werkstücke beim Verschweißen in einem Winkel von 3° bis 5° zueinander angeordnet sind.

4. Bauteil, insbesondere für ein Kraftfahrzeug, bestehend aus zwei in einem Winkel von 2° bis 8° zueinander angeordneten, beschichteten Werkstücken, insbesondere verzinkten Stahlblechen (1, 2; 3, 4), die miteinander laserverschweißt sind.

5. Bauteil nach Anspruch 4, **dadurch gekennzeichnet, daß** die beschichteten Werkstücke in einem Winkel von 2,5° bis 7°, insbesondere in einem Winkel von 3° bis 5°, zueinander angeordnet sind.

6. Verfahren zum Ermitteln der Position des Laserstrahls (15) beim Laserschweißen von beschichteten Werkstücken, insbesondere von verzinkten Stahlblechen (1, 2; 3, 4), bei dem die Werkstücke in einem Winkel von 2° bis 8°, vorzugsweise in einem Winkel von 2,5° bis 7°, vorzugsweise in einem Winkel von 3° bis 5°, zueinander angeordnet sind,
**dadurch gekennzeichnet,**
**daß** die Position des Laserstrahls (15) zunächst so eingestellt wird, daß der Abstand zwischen den Werkstücken (1, 2; 5, 7.2; 6, 8.2) einen vorgegebenen Wert beträgt, daß eine Schliffprobe der verschweißten Werkstücke hergestellt und ausgewertet wird und daß die Position der Verschweißung und/oder des Laserstrahls (15) in Abhängigkeit der Schliffprobe nachjustiert wird.
